# EUROPEAN PATENT APPLICATION

(11) **EP 2 500 867 A1**
(43) Date of publication of application: **19.09.2012**
(21) Application number: 11158660.8
(22) Date of filing: 17.03.2011
(51) Int. Cl.: G06T 17/05, G06T 15/04

(54) **Methods and devices for displaying buildings**

(71) Applicant: Harman Becker Automotive Systems GmbH, 76307 Karlsbad (DE)
(72) Inventor: Kunath, Peter, 80999, München (DE); Pryakhin, Alexey, 81476, München (DE); Strassenburg-Kleciak, Marek, 85748, Garching (DE); Feldbauer, Thomas, 93047, Regensburg (DE); Ivanov, Vladimir, 81375, München (DE)
(74) Representative: Sticht, Andreas

(57) **Abstract**

The present invention relates to methods and devices for displaying a building. Floors are partitioned into at least two different groups (37, 38, 39), and different textures are applied to the different groups

## Description

This invention relates to methods and devices for displaying buildings, for example for displaying buildings on a screen of a navigation system, and to corresponding navigation systems.

### Background

Navigation systems which provide driving recommendations for a driver of a vehicle have been known for many years. These navigation systems can provide driving recommendations by simply indicating an arrow indicating the driving direction. Furthermore, map data showing a network of roads may be displayed in a bird's eye perspective to the driver. The recommended route can then be highlighted on the road network shown on the display together with driving recommendations.

In recent years the displayed navigation information became more and more user-friendly and it is known to display a three-dimensional perspective of the scene on a display as seen by the driver. In this context the buildings neighboring the roads are displayed in addition to the roads.

There exist databases including image data of the road network including the vehicle surrounding. In these image data buildings or other monuments as seen from the road are shown. The amount of data needed to provide images of the surrounding in a larger geographical area is quite large, as normally a picture of a building showing the façade of the building includes approximately 2 Megapixel. These detailed image data cannot be used in connection with a navigation system incorporated into a vehicle which contain map data of a whole country or a whole continent. At the same time a three-dimensional representation of a vehicle surrounding is needed in which the user of the map data to which the three-dimensional representation is shown can at least recognize the displayed buildings shown in vehicle surrounding when the displayed buildings are compared to the reality when looking out of the window.

### Summary

Accordingly, a need exists to provide a possibility to efficiently display buildings in a manner enabling a viewer, for example a driver looking on a corresponding navigation system, to identify the displayed building with a corresponding real building.

This need is met by the features of the independent claims. In the dependent claims further embodiments of the invention are described.

According to a first aspect of the invention a method for displaying a building is provided, comprising partitioning floors of a stored model of a building into at least two different floor groups, applying different textures to different floor groups and displaying the building with the different textures. A floor group, in this respect, may comprise one or more floors. A texture may comprise a specific pattern and/or one or more specific colors.

Through the use of different textures for different floor groups, a building is more easy to recognize when seen in reality.

The two different floor groups may comprise a first group consisting of a ground floor and a second group comprising one or more upper floors.

Preferably, the floors are partitioned into at least three different floor groups. In this case, in addition to the group consisting of the ground floor and a group comprising upper floors, a group consisting of a top floor may be employed.

An additional texture, for example an additional color, may be applied to the roof. This further enhances the recognisability of buildings.

A brightness gradient may be applied to the building when being displayed to give a more realistic impression regarding lighting of the building.

Applying the textures may comprise applying a texture repeatedly in different locations to the same floor group, for example repeatedly in a horizontal direction or, in case the floor group comprises more than one floor, also in a vertical direction.

The displaying may be performed on a display of a navigation device.

According to another aspect of the invention, a device is provided, comprising a storage for storing a model of a building and textures, a display and a processor unit. The device, in particular the processor unit, may be configured to partition the floors of the model into at least two different floor groups, to apply different textures to different floor groups and to cause the display to display the building with the different textures.

In an embodiment, the device is configured to perform any one of the methods explained above.

The device may be part of a navigation system. In particular, the processor may be a processor of a navigation system, and the display may be a display of the navigation system.

Features of the above-described embodiments may be combined with each other unless noted otherwise.

### Brief Description of the Drawings

The invention will be described in further detail with reference to the accompanying drawings, in which
Fig. 1 shows a schematic view of a navigation system according to an embodiment,
Fig. 2 shows a flow chart illustrating a method according to an embodiment, and
Figs. 3A-3E show views for illustrating method steps of the embodiment of Fig. 2.

### Detailed Description

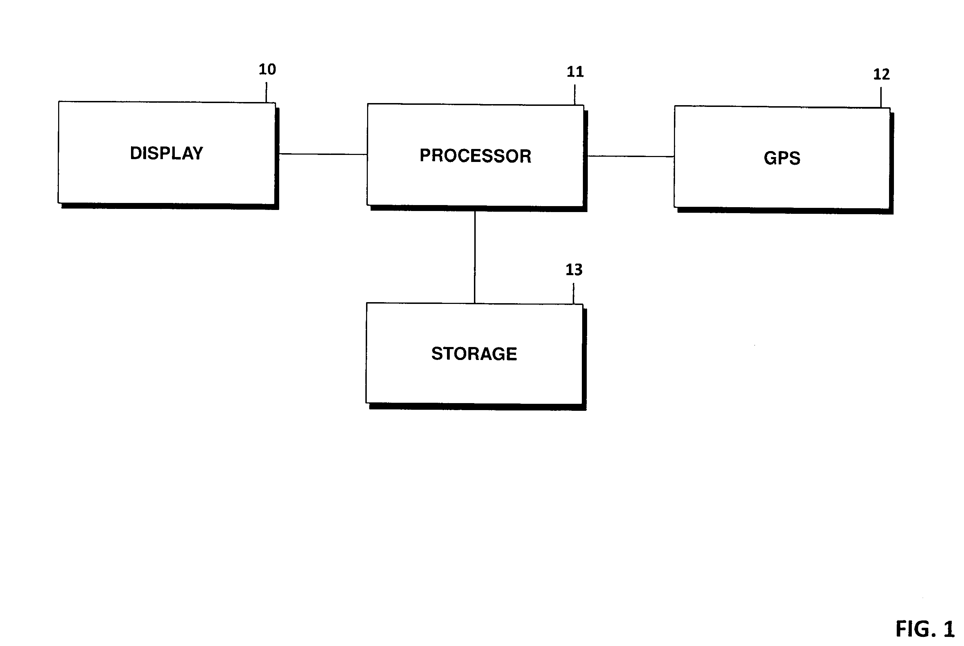

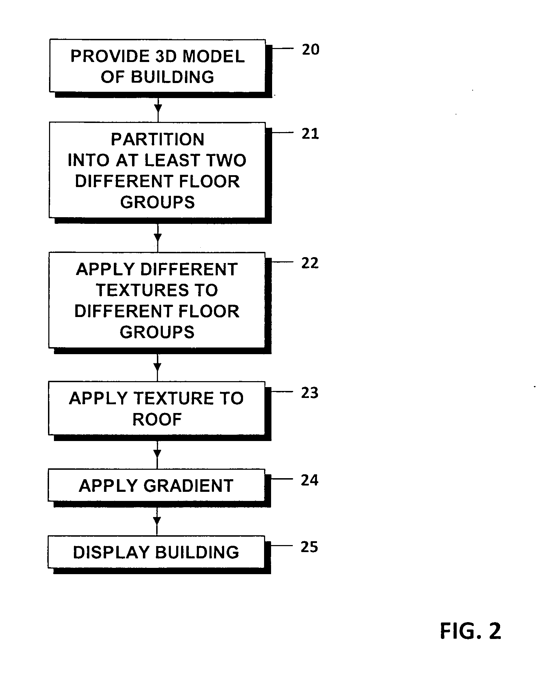

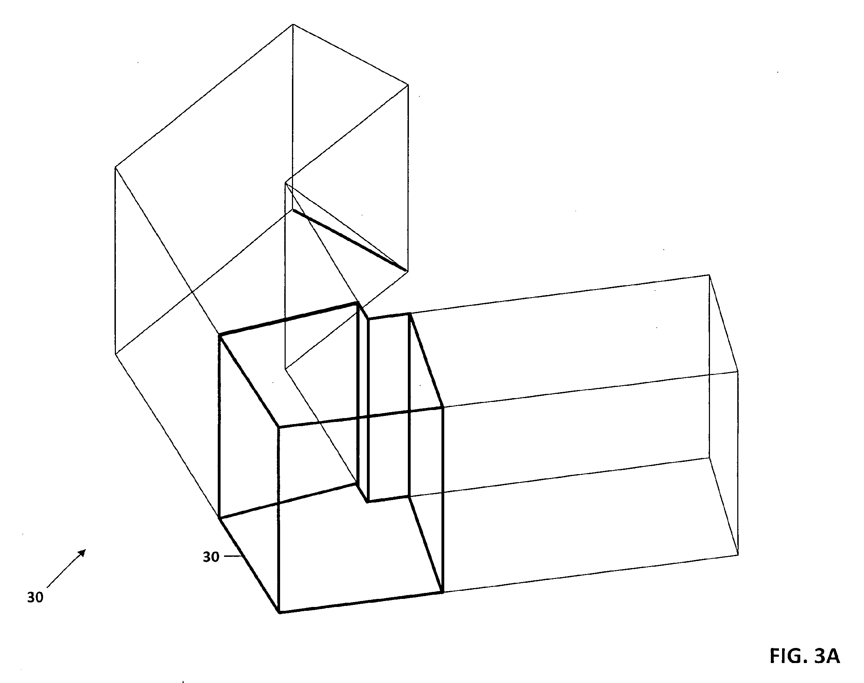

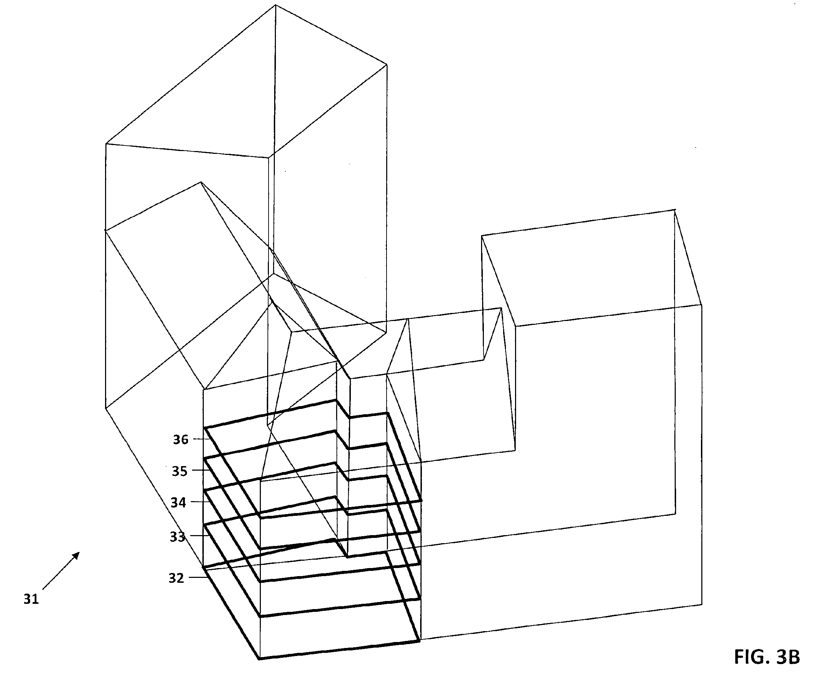

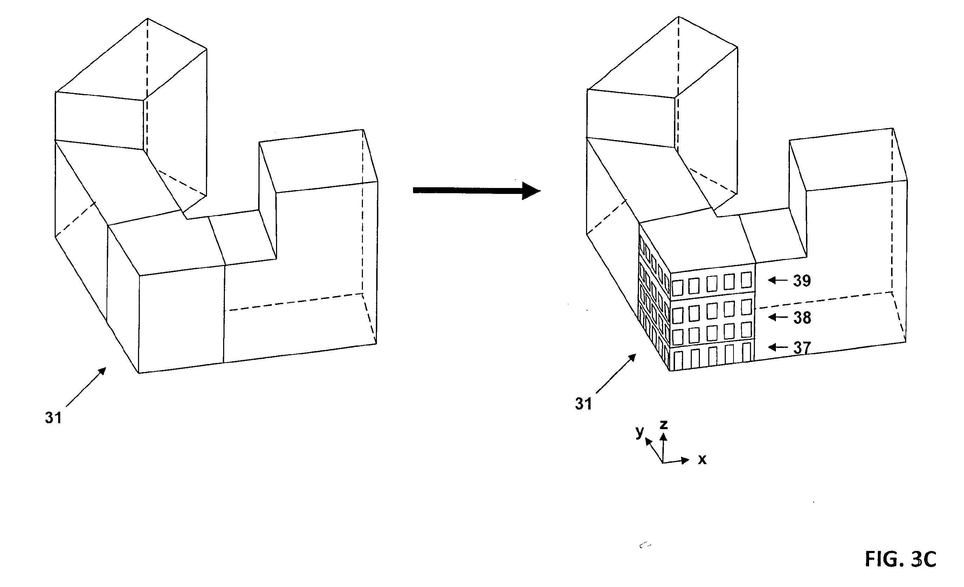

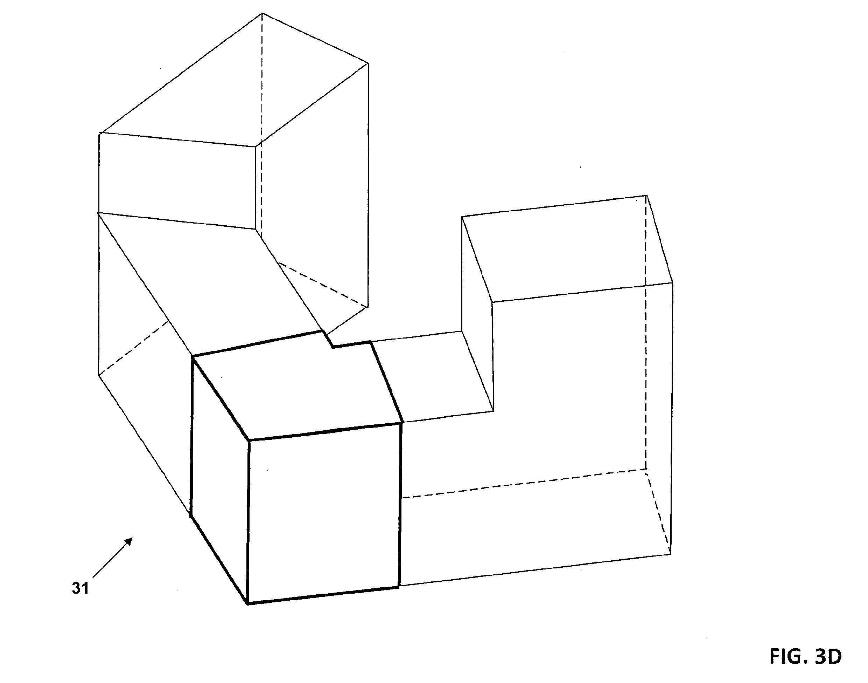

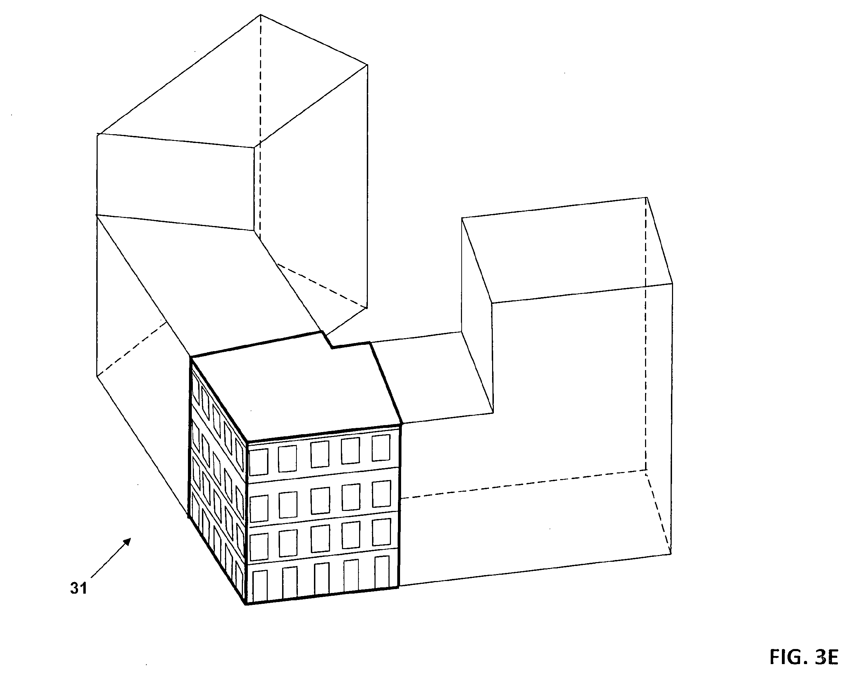

In Fig. 1 a navigation system according to an embodiment of the present invention is shown. The navigation system of Fig. 1 comprises a display 10, a processor 11, a GPS module 12 and a storage 13. Storage 13 may be any kind of storage, like a rewritable or fixed memory, or a data carrier like a chip card, a DVD RAM or ROM, a Blueray Disk, a Harddisk or also combinations of the aforementioned possibilities. Storage 13 in the embodiment of Fig. 1 stores maps together with models of buildings in the area covered by the maps. Furthermore, textures may be stored in a storage 13, either associated with buildings or as general textures. GPS module 12 serves for determining a position, and processor 11 cooperates with storage 13 to display a corresponding map portion on display 10. The displaying may in particular be performed in a three-dimensional manner. When buildings are nearby the determined position, the buildings may be displayed as will be described below with references to Fig. 2 and 3 in greater detail.

Furthermore, processor 11 may calculate a route to a desired destination and give corresponding directions to a driver of a vehicle or other user of the navigation system.

However, it has to be noted that the use of the present invention is not restricted to navigation systems, but can be applied generally when buildings are to be displayed on a display screen.

It should be noted that the elements shown in Fig. 1 are not exhaustive, and other embodiments may comprise alternative elements, less elements or additional elements. For example, navigation systems additionally may comprise audio output means for outputting messages to a driver or a user interface for receiving a user input.

Next, with reference to Figs. 2 and 3, an embodiment of a method for displaying buildings will be discussed, which method may for example be implemented in the navigation system of Fig. 1.

In step 20 of Fig. 2, a 3D-model of a building is provided. For example, the 3D-model of the building may be stored in storage 20.

To give an example, in Fig. 3A a three-dimensional representation of a chain of buildings 30 including a building 31 to be displayed is shown. Data for such a three-dimensional representation, for example the corresponding corner coordinates, may be stored in storage 13.

At 21, the floors of the building(s) to be displayed are partitioned into at least two different floor groups. In Fig. 3B building 31 is shown having five floors, a ground floor 32, intermediate floors 33-35 and a top floor 36 immediately beneath the roof. As a matter of course, for other buildings more or less floors may be present. The number of floors may for example be stored together with the model in storage 13 of Fig. 1. For obtaining such a number of floors, for example an image analysis of images taken from the corresponding real buildings may be performed.

The floors shown in Fig. 3B may for example be grouped in three floor groups, a first group comprising only ground floor 32, a second group comprising intermediate floors 33-35 and a third group comprising only top floor 36. In other embodiments, only two groups, for example a first group comprising only ground floor 32 and a second group comprising the remaining floors may be used. In still other embodiments, other numbers of groups and/or other partitionings of the floors into the groups may be used.

In step 22 different textures are applied to different floor groups. This will be explained with reference to Fig. 3C. On the left side in Fig. 3C again building 31 is shown. On the right side building 31 is shown with the floors grouped into a first group 37 comprising only the ground floor, a second group 38 comprising two intermediate floors and a third group 39 comprising only the top floor. As can be seen in Fig. 3C, different textures, in this case for example textures representing doors for first group 37, textures representing ordinary windows for second group 38 and textures comprising smaller windows with a special pattern above the windows, are used. As also can be seen in Fig. 3C, for each group the same pattern may be applied repeatedly at least in the x- and y-directions shown in Fig. 3C, i.e. in a horizontal direction. In the case of group 38, additionally the same pattern may be applied for each floor of the group, i.e. repeated in a vertical direction (z-direction).

It should be noted that while the textures in Fig. 3C involve different patterns, i.e. different representations of windows or floors, in other embodiments the different textures may simply be different colors. Furthermore, the textures may be textures associated with the particular building or textures usable for a plurality of different buildings.

Through the use of textures repeatedly, storage space in a corresponding storage like storage 13 may be saved.

In step 23 of Fig. 2 an additional texture may be applied to the roof. For example, a specific color matching the real color of a roof of the corresponding real building may be applied.

At step 24 a brightness gradient is applied to the building to simulate a more realistic lighting. This is shown in Figs. 3D and 3E. In Fig. 3D only the gradient is shown for illustration purposes. It can be seen that in this case the color is lighter at the top of the building and darker at the bottom of the building, which corresponds to a typical situation with high buildings in streets where the sun can easier reach the upper floors than the lower floors. In Fig. 3E the gradient is shown as applied to the building with the different textures.

Finally, in step 25 the building is displayed, for example on display 10 of Fig. 10.

It should be noted that while with reference to Figs. 3A-3E the method has been explained as applied to building 31, as a matter of cause the method may be applied to some or all buildings of building chain 30 and also to other buildings to be displayed on display 10. On the other hand, it is not required to apply the method to all buildings displayed.

Moreover, it has to be noted that steps 23 and 24 of Fig. 2 are purely optional. Furthermore, the steps shown in Fig. 2 need not necessarily be performed in the order shown, and different orders and/or simultaneous execution of steps may be possible. For example, the texture to the roof in step 23 may be applied prior to steps 21 and 22 or simultaneously with step 22. Also, while in the method of Fig. 2 the building is displayed at the end of the method, and steps 20 and 24 are precalculations for displaying the building, in other embodiments the display may be updated after each step, such that a viewer first sees the building similar to the representation in Fig. 3A and then sees that texture and gradients are added.

As can be seen, a plurality of modifications is possible. Therefore, the above-described embodiments are not to be construed as limiting the scope of the present application.

## Claims

1. A method for displaying buildings, comprising:
partitioning floors of a stored model of the building (31) into at least two different floor groups,
applying different textures to the at least two different floor groups, and
displaying the building (31) with the different textures.

2. The method of claim 1, wherein the at least two different textures comprise at least one of different colors and different patterns.

3. The method of claim 1 or 2, wherein the at least two different floor groups comprise a first group consisting of a ground floor and a second group comprising at least one further floor.

4. The method of any one of claims 1-3, wherein the at least two different floor groups comprise at least three different floor groups.

5. The method of claim 4, wherein the at least three different floor groups comprise a first group consisting of a ground floor, a second group comprising at least one intermediate floor and a third group consisting of a top floor.

6. The method of any one of claims 1-5, wherein applying the different textures comprises applying the different textures repeatedly to each floor group repeatedly at least in a horizontal direction.

7. The method of any one of claims 1-6, further comprising applying a texture to a roof of the building (31).

8. The method of any one of claims 1-7, further comprising applying a brightness gradient to the building (31).

9. The method of any one of claims 1-8, wherein displaying the building comprises displaying the building (31) on a display (10) of a navigation device.

10. The method of any one of claims 1-9, wherein the different textures are associated with the building (31).

11. A device, comprising:
a display (10),
a processing unit (11), and
a storage (13) for storing a model of at least one building (31) and at least two different textures,
wherein the processor unit (11) is configured to partition floors of the model of the building into at least two different floor groups, to apply different textures to the at least two different floor groups and to cause the display (10) to display the building (31) with the different textures.

12. The device of claim 11, wherein the device is configured to perform the method as defined in any one of claims 1-10.

13. A navigation system, comprising a device as defined in claim 11 or 12.
